(19)

Europäisches
Patentamt

European
Patent Office

Office européen
des brevets

(11) **EP 4 487 941 A1**

(12) **EUROPÄISCHE PATENTANMELDUNG**

(43) Veröffentlichungstag:
**08.01.2025 Patentblatt 2025/02**

(21) Anmeldenummer: **24172070.5**

(22) Anmeldetag: **24.04.2024**

(51) Internationale Patentklassifikation (IPC):
*B01F 23/232* (2022.01)   *B01F 23/454* (2022.01)
*B01F 25/21* (2022.01)    *B01F 25/312* (2022.01)
*B01F 25/53* (2022.01)

(52) Gemeinsame Patentklassifikation (CPC):
**B01F 23/23231; B01F 23/454; B01F 25/21;
B01F 25/312; B01F 25/53**

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**GE KH MA MD TN**

(30) Priorität: **23.05.2023 DE 102023113405**

(71) Anmelder: **Messer SE & Co. KGaA
65812 Bad Soden (DE)**

(72) Erfinder:
• **Fährmann, Franco
41564 Kaarst (DE)**
• **Nicolai, Engler
47800 Krefeld (DE)**

(54) **VORRICHTUNG ZUM EINTRAGEN EINES GASES IN EINEM FLUID UND VERWENDUNG DER VORRICHTUNG**

(57)  Eine erfindungsgemäße Vorrichtung zum Eintragen eines Gases in ein Fluid umfasst eine Rohrleitung (2), in der eine Fördereinrichtung (5) und eine Mischeinrichtung (7) zum Anreichern des Fluids mit einem Gas, beispielsweise eine Venturidüse, integriert sind. Die Rohrleitung mündet an einer Ausströmdüse (10) in ein Behandlungsbecken (4) aus. Die Ausströmdüse weist einen rohrförmigen Düsenkörper (14) auf, der an seiner mündungsseitigen Stirnseite mit wenigstens einer radialen Austrittsöffnung (18a, 18b, 18c, 18d) sowie mit einem im Wesentlichen senkrecht zur axialen Erstreckung des Düsenkörpers angeordneten und sich radial über den Außenumfang des Düsenkörpers erstreckendem Umlenkblech (16) ausgerüstet ist, auf welchem Umlenkblech auf dessen dem Düsenkörper zugewandten Seite ein sich mit seiner Spitze (22) zentral in das Innere des Düsenkörpers hinein erstreckender Umlenkkegel (15) angeordnet ist.

Fig. 1

Fig. 2

EP 4 487 941 A1

**Beschreibung**

Die Erfindung betrifft eine Vorrichtung zum Eintragen eines Gases in ein Fluid, mit einer Rohrleitung, in der eine Fördereinrichtung zum Ansaugen und Fördern eines zu behandelnden Fluids sowie eine mit einer Gaszuleitung ausgerüstete Mischeinrichtung zum Anreichern des Fluids mit einem Gas in das Fluid integriert sind, und die an einer Ausströmdüse zum Einleiten des mit dem Gas angereicherten Fluids in ein Behandlungsbecken ausmündet.

Zur Reinigung von kommunalem und industriellem Abwasser werden verschiedene mechanische, biologische und chemische Verfahren eingesetzt. In biologischen Abwasserreinigungsverfahren werden organische Belastungen durch Bakterien und andere Mikroorganismen abgebaut. Beim Belebtschlammverfahren wird dabei das zu reinigende Abwasser einem Klärbecken, dem sogenannten Belebungsbecken zugeführt, in denen die abbauenden Mikroorganismen als eine wässerige Suspension, dem sogenannten Belebtschlamm, vorgehalten werden. Die Behandlung kann dabei in einem kontinuierlichen oder einem diskontinuierlichen Verfahren erfolgen. Beim kontinuierlichen Verfahren wird das Abwasser nach dem Durchlaufen des Belebungsbeckens einem Absetzbecken zugeführt, in dem mitgeführter Belebschlamm vom gereinigtem Abwasser getrennt und anschließend in das Belebungsbecken zurückgeführt wird. Beim diskontinuierlichen Verfahren laufen die verschiedenen Stufen des Belebtschlammverfahrens nacheinander in einem einzelnen Becken ab.

In beiden Fällen erfolgt die biologische Reinigung ganz überwiegend durch aerob ablaufende Stoffwechselprozesse. Entscheidend für eine funktionierende Elimination der biologisch abbaubaren Schmutz- und Schadstofffracht ist somit eine ausreichende Versorgung des Belebtschlamms mit Sauerstoff. In konventionellen Anlagen erfolgt die Zugabe von Sauerstoff beispielsweise durch Einspeisen von Druckluft in das Becken. Reicht die Belüftung mit Druckluft zur Deckung des Sauerstoffbedarfs nicht aus, stellt die Verwendung von reinem Sauerstoff häufig eine Alternative dar. Da eine derartige Versorgung mit reinem Sauerstoff einen Großteil der Betriebskosten von Kläranlagen ausmacht, ist es zweckmäßig, diesen möglichst verlustarm und mit einem hohen Wirkungsgrad in das Abwasser einzutragen.

Verluste entstehen insbesondere, wenn ungelöste Sauerstoffblasen das Wasser durch die Oberfläche verlassen. Für eine hohe Eintragseffizienz ist es daher erforderlich, den Sauerstoff in Form möglichst kleiner Blasen einzutragen, um eine hohe Phasengrenzfläche, gepaart mit einer hohen Verweilzeit, zu erreichen.

Üblicherweise werden am Beckenboden angeordnete Belüftungselemente verwendet, die den Sauerstoff gleichmäßig über die Beckenfläche verteilt eintragen, wie beispielsweise Begasungsschläuche, also perforierter Schläuche, durch die Luft oder Sauerstoff mit Druck in das zu behandelnde Fluid eingetragen wird.

Derartige Systeme, wie sie beispielsweise in der DE 100 58 331 A1 oder der DE 43 15 733 A1 beschrieben werden, haben jedoch aufgrund der immer noch vergleichsweise großen Blasengröße nur eine geringe Eintragseffizienz.

Insbesondere für flachere Becken kommen daher häufig Systeme zum Einsatz, mit Hilfe derer ein Teilstrom des zu behandelnden Fluids im Kreislauf geführt und dabei mit Sauerstoff oder Luft angereichert wird. Beispiele hierfür werden in der WO 2023 023890 A1, der DE 26 49 756 A1 oder der FR 2 825 996 A1 vorgeschlagen. Bei den dort beschriebenen Anordnungen wird in einer Rohrleitung mittels einer Pumpe ein starker Fluidstrom erzeugt, dem an einer der Pumpe nachgeschalteten Venturidüse Sauerstoff zugeführt wird. Das auf diese Weise angereicherte Fluid wird anschließend als kräftiger, unidirektionaler Strahl horizontal oder vertikal in ein Behandlungsbecken eingetragen. Durch die zusätzliche Energie der Pumpe ist es möglich, vergleichsweise kleine Blasen zu erzeugen und somit ein gutes Oberflächen-zu-Volumen-Verhältnis Gases zu realisieren. Die Zuführung des behandelten Fluids im Form eines unidirektionalen Strahls führt im Behandlungsbecken jedoch zur Ausbildung von Strömungsbildern, bei denen ein Teil Fluids nicht oder nur unzureichend mit dem eingetragenen Gas versorgt wird. Im Falle eines Belebungsbeckens führt dies beispielsweise dazu, dass der Klärschlamm zumindest teilweise in begrenzte Bereiche des Belebungsbeckens gedrängt wird. Die Folge sind mehr oder weniger große Toträume, in denen sich Schlamm absetzt, der für die weiteren Abbauprozesse nicht mehr zur Verfügung steht.

Aufgabe der vorliegenden Erfindung ist somit, eine Anordnung zum Eintragen eines Gases in ein Fluid, insbesondere von Sauerstoff oder Kohlendioxid in Abwasser anzugeben, das sich durch eine besonders hohe Effizienz auszeichnet, und bei dem eine möglichst homogene Durchmischung im Behandlungsbecken gewährleistet ist.

Gelöst ist diese Aufgabe durch eine Vorrichtung mit den Merkmalen des Patentanspruchs 1. Vorteilhafte Ausgestaltungen der Erfindung sind in den Unteransprüchen angegeben.

Eine Vorrichtung der eingangs genannten Art und Zweckbestimmung ist also dadurch gekennzeichnet, dass die Ausströmdüse einen rohrförmigen Düsenkörper aufweist, der an seiner mündungsseitigen Stirnseite mit wenigstens einer radialen Austrittsöffnung sowie mit einem im Wesentlichen senkrecht zur Längsachse des Düsenkörpers angeordneten und sich radial über den Außenumfang des Düsenkörpers erstreckendem Umlenkblech ausgerüstet ist, das in Strömungsrichtung hinter der wenigstens einen Austrittsöffnung angeordnet ist und auf dem ein sich mit seiner Spitze zentral in das Innere des Düsenkörpers hinein erstreckender Umlenkkegel angeordnet ist.

Gemäß der Erfindung wird also das zu behandelnde Fluid aus einem Reservoir, bei dem es sich beispielsweise um das gleiche Behandlungsbecken handelt, in das auch das mit dem Gas angereicherte Fluid eingeleitet wird, mittels der Fördereinrichtung (Pumpe) der Mischeinrichtung zugeführt und dort mit Gas aus der Gaszuleitung angereichert. Bei der Mischeinrichtung handelt es sich beispielsweise um eine Venturidüse, in der das zu behandelnde Fluid beschleunigt wird, wodurch ein das Gas ansaugender Unterdruck erzeugt wird. Das mit dem Gas angereicherte Fluid strömt an der Ausströmdüse in das Behandlungsbecken ein, wobei es über die wenigstens eine Austrittsöffnung in einer zum Düsenkörper radiale Richtung austritt. Die Strömungsverbindung der Ausströmdüse mit der Rohrleitung kann dabei von oben, also durch Eintauchen der Rohrleitung in das Fluidbad, oder von unten, über einen durch den Beckenboden geführten Abschnitt der Rohrleitung erfolgen.

Die bevorzugt lösbar mit der Rohrleitung verbundene Ausströmdüse weist einen beispielsweise aus Metall gefertigten, rohrförmigen Düsenkörper auf, der im Einsatz der Vorrichtung bevorzugt senkrecht in einem Behandlungsbecken angeordnet ist und bevorzugt mit seiner wenigstens einen Ausströmöffnung innerhalb eines im Behandlungsbecken vorliegenden Fluidbads ausmündet. Beispielsweise handelt es sich beim Behandlungsbecken um ein Belebungsbecken und bei dem Fluidbad um Belebtschlamm.

Das Umlenkblech ist als zylindrische Scheibe konzipiert, die im Wesentlichen senkrecht zur Längsachse des Düsenkörpers angeordnet ist und diesen auf dessen mündungsseitiger Stirnseite verschließt. Die Austrittsöffnung oder die Austrittsöffnungen ist/sind - in Strömungsrichtung gesehen - im Düsenkörper vor dem Umlenkblech angeordnet oder schließen mit diesem ab. Der Außendurchmesser des Umlenkblechs ist größer als der Außenradius des Düsenkörpers und steht in radialer Hinsicht gleichmäßig in allen Richtungen über diesem vor, sodass das über die seitliche Austrittsöffnung bzw. die seitlichen Austrittsöffnungen ausströmende angereicherte Fluid vom Umlenkblech in eine zumindest weitgehend radiale Richtung gezwungen wird. Im Falle, dass der Düsenkörper senkrecht im Behandlungsbecken angeordnet ist, strömt also das angereicherte Fluid in einer zum Beckenboden parallelen Ebene aus der Ausströmöffnung oder den Ausströmöffnungen aus.

Die Austrittsöffnung oder die Austrittsöffnungen ist/sind so beschaffen, dass das angereicherte Fluid über einen großen Winkelbereich bzw. große Winkelbereiche ausgetragen wird. Beispielsweise überstreicht der Öffnungswinkel der Austrittsöffnung bzw. die Summe der Öffnungswinkel der Austrittsöffnungen mindestens die Hälfte des Umfangs des Düsenkörpers. Beispielsweise handelt es sich bei der Austrittsöffnung um einen radialen Schlitz zwischen Düsenkörper und Umlenkblech, der sich zumindest nahezu um die gesamte Umfangsrichtung des Düsenkörpers erstreckt. Eine bevorzugte Ausgestaltung sieht jedoch eine Mehrzahl von vorzugsweise gleichartigen, in vorzugsweise gleichen Winkelabständen angeordneten Austrittsöffnungen vor. Beispielsweise handelt es sich um drei, vier oder mehr gleichartige, beispielsweise halbkreisförmige Austrittsöffnungen, die in gleichmäßigen Winkelabständen in Umlaufrichtung am Düsenkörper angeordnet sind und mündungsseitig bis zum Umlenkblech reichen.

Der bevorzugt rotationssymmetrisch um eine Längsachse des Düsenkörpers angeordnete Umlenkkegel ist in der Ausströmdüse innenseitig am Umlenkblech angeordnet, beispielsweise verschweißt oder einstückig mit diesem ausgeführt, und steht mit seiner Spitze in das Innere des Düsenkörpers vor. Der Strom des in den Düsenkörper eintretenden angereicherten Fluids wird so am Umlenkkegel geteilt, in radiale Richtung gezwungen und über die wenigstens eine Austrittsöffnung in das Behandlungsbecken eingeleitet.

Um einen möglichst geringen Druckabfall an der Ausströmdüse zu gewährleisten, sieht eine vorteilhafte Ausgestaltung der Erfindung vor, dass der Umlenkkegel rotationssymmetrisch ausgebildet ist und eine gerade oder eine konvex gekrümmte Außenkontur (Mantellinie des Umlenkkegels) aufweist. Beispielsweise folgt die Mantellinie in radialer Richtung einem Verlauf, der sich durch die Gleichung

$$f(r) = A*(R-r)^n$$

mit $n \geq 1$, $0 < A \leq 1$ und $0 \leq r \leq R$ beschreiben lässt; dabei ist R der Radius des Umlenkbleches. Bevorzugt ist dabei $1{,}5 < n < 2{,}5$, d.h. die Mantellinie zeigt einen ungefähr parabolischen ($n=2$) Verlauf. Für A gilt bevorzugt: $0{,}001 < A < 0{,}1$.

Zweckmäßigerweise ist die Ausströmdüse mit einem Prozessanschluss zum lösbaren Befestigen an der Rohrleitung ausgerüstet. Beim Prozessanschluss handelt es sich beispielsweise um eine Flanschverbindung oder um einen Gewindeanschluss. Auf diese Weise kann die Ausströmdüse im Falle einer Wartung leicht abgenommen und wieder an die Rohrleitung angeschlossen werden.

Die Mischeinrichtung umfasst bevorzugt eine Venturidüse, an der das Gas in das von der Fördereinrichtung bewegte Fluid eingesaugt wird. Erfindungsgemäß können jedoch auch andere Mischeinrichtungen zum Einsatz kommen, die einen effiziente Anreicherung des Fluids mit einem Gas ermöglichen.

Die Rohrleitung ist bevorzugt mit einer Ansaugleitung für das zu behandelnde Fluid ausgerüstet, die im Betrieb der Vorrichtung in ein im Behandlungsbecken befindliches Fluidbad eintaucht. Bei dieser Anordnung findet also eine Kreislaufführung oder zumindest eine Teilkreislaufführung des zu behandelnden Fluids statt: Aus einem mit dem zu behandelnden Fluid gefüllten Behandlungsbecken wird ein Strom des zu behandelnden Fluids mittels der Fördereinrichtung angesaugt, in der Mischeinrichtung mit Gas angereichert und anschließend an der Ausströmdüse erneut dem Behandlungsbecken zugeführt. Die vollständige Entnahme des zu behandelnden Fluids aus dem Behandlungsbecken oder ggf. einem diesem nachgeschalteten Becken ist jedoch nicht zwingend; ein Teilstrom des zu behandelnden Fluids oder auch das gesamte zu behandelnde Fluid kann beispielsweise auch direkt aus einer Zuleitung für frisches Abwasser entnommen, in der erfindungsgemäßen Vorrichtung mit Gas angereichert und anschließend dem Behandlungsbecken zugeführt werden, während aus dem Behandlungsbecken gleichzeitig eine entsprechende Menge an behandeltem Fluid abgezogen wird.

Im Einsatz der Vorrichtung mündet die Ausströmdüse bevorzugt innerhalb eines im Behandlungsbecken vorliegenden Fluidbades aus; besonders bevorzugt befindet sich sie sich am oder knapp oberhalb des Beckenbodens, wobei das Umlenkblech derart angeordnet ist, dass das behandelte Fluid in einer zum Beckenboden parallelen Ebene aus der Ausströmdüse ausgestoßen wird.

Eine besonders vorteilhafte Ausgestaltung der Erfindung sieht vor, dass als zu behandelndes Fluid ein wässeriges Fluid, wie Abwasser, und als Gas Sauerstoff oder Druckluft zum Einsatz kommt. Insbesondere eignet sich die erfindungsgemäße Vorrichtung zum Eintragen von reinem Sauerstoff, Druckluft, Ozon oder einem sonstigen sauerstoffhaltigen Gas in Belebtschlamm. Als "reiner Sauerstoff" soll hier ein Gas mit einem Sauerstoffanteil von mindestens 90 Vol.-%, bevorzugt mindestens 95 Vol.-% bezeichnet werden.

Eine bevorzugte Verwendung der erfindungsgemäßen Vorrichtung besteht im Einleiten eines sauerstoffreichen Gases in ein Belebungsbecken einer biologischen Abwasserstufe. Die Vorrichtung kann dabei in einem kontinuierlichen wie auch in einem diskontinuierlichen Belebtschlammverfahren zum Einsatz kommen. Eine andere vorteilhafte Verwendungsmöglichkeit besteht beispielsweise in der Neutralisierung von basischen Flüssigkeiten, beispielsweise bestimmte Abwässer, durch Einleiten von Kohlendioxid.

Die Einsatzmöglichkeiten der erfindungsgemäßen Vorrichtung sind jedoch nicht hierauf beschränkt, vielmehr kann mit ihr eine Vielzahl unterschiedlicher Fluide mit unterschiedlichen Gasen angereichert werden. Eine andere vorteilhafte Einsatzmöglichkeit besteht beispielsweise in der Neutralisierung von basischen Flüssigkeiten, beispielsweise bestimmte Abwässer, durch Anreichern mit Kohlendioxid.

Der spezielle Aufbau der Ausströmdüse der erfindungsgemäßen Vorrichtung ermöglicht eine gleichmäßige und weitgehend homogene Verteilung des mit Gas angereicherten Fluids im gesamten Behandlungsbecken und somit eine sehr effiziente Verteilung des Gases. Die Form der Düse sorgt dafür, dass die eingesetzte Energie signifikant stärker zur Dispergierung des Gases und zur Erzeugung möglichst kleiner Sauerstoffblasen genutzt wird, als dies bei Injektor-Systemen der Fall ist, bei denen der Eintrag linear über eine Venturi-Düse oder eine Blende erfolgt. Des Weiteren ließ sich in Versuchen eine gleichmäßige Rotationsbewegung des Beckeninhalts beobachten, die der Qualität der Durchmischung ebenfalls förderlich ist.

Ferner ist der für der die Installation erforderliche Material- und Investitionsaufwand vergleichsweise gering, da durch die zentrale Installation der Ausströmdüse im Bereich des Mittelpunkts eines zylinderförmigen Behandlungsbeckens eine vergleichsweise kurze Rohrleitung notwendig ist, während bei konventionellen Systemen häufig wenigstens zwei linear ausströmende Düsen an diametral gegenüberliegenden Seiten des Behandlungsbeckens installiert werden müssen, um sicherzustellen, dass sich bei der Belüftung keine Toträume ausbilden, in denen der Schlamm sich absetzt.

Anhand der Zeichnungen soll ein Ausführungsbeispiel der Erfindung näher erläutert werden. In schematischen Ansichten zeigen:

Fig. 1: Das Schaltbild einer erfindungsgemäßen Vorrichtung beim Einsatz in einem Belebungsbecken,

Fig. 2: Die Ausströmdüse der Vorrichtung aus Fig. 1 in einer vergrößerten Schnittansicht.

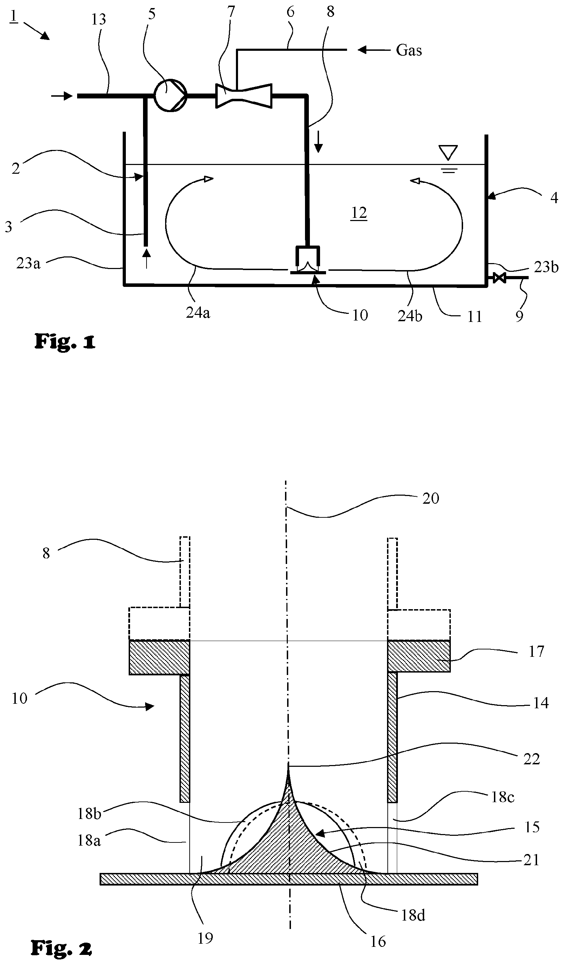

Bei der in Fig. 1 gezeigten Vorrichtung 1 handelt es sich im hier gezeigten Ausführungsbeispiel um eine Vorrichtung zum Anreichern von Belebtschlamm mit Sauerstoff; hierdurch soll jedoch der Einsatzbereich der erfindungsgemäßen Vorrichtung nicht eingeschränkt werden.

In an sich bekannter Weise umfasst die Vorrichtung 1 eine Rohrleitung 2 mit einem Ansaugleitung 3 zum Absaugen von Abwasser bzw. Belebtschlamm aus einem Behandlungsbecken 4 (Belebungsbecken), einer Pumpe 5, einer mit einer Gaszufuhrleitung 6 ausgerüstete Mischeinrichtung 7 zum Einmischen eines Gases in die über die Rohrleitung 2 geförderte Flüssigkeit, beider es sich im hier gezeigten Ausführungsbeispiel um eine Venturidüse handelt, und einer Zulaufleitung 8. Ein Auslauf 9 dient zum kontinuierlichen oder diskontinuierlichen Abführen des behandelten Abwassers; beispielsweise mündet der Auslauf 9 in ein hier nicht gezeigtes Absetzbecken ein.

Die Zulaufleitung 8 ist mit einer unten näher beschriebenen Ausströmdüse 10 ausgerüstet, an der das angereicherte Fluid die Rohrleitung 2 verlässt. Im hier beschriebenen Ausführungsbeispiel taucht die Zulaufleitung 8 von oben in das Behandlungsbecken 4 ein; es ist im Rahmen der Erfindung freilich ebenso vorstellbar, dass die Zulaufleitung 8 von unten, d.h. durch den Beckenboden 11 des Behandlungsbeckens 4 geführt ist. In beiden Fällen mündet die Zulaufleitung 8 unterhalb der Füllhöhe eines sich im Behandlungsbecken 4 befindlichen Fluids 12 (Belebtschlamm), bevorzugt im Bereich des Beckenbodens 11 an der Ausströmdüse 10 aus. Die Gaszufuhrleitung 6 ist in hier nicht gezeigter Weise an eine Quelle für ein unter Druck stehendes Gas, beispielsweise Sauerstoff oder Druckluft, angeschlossen. Bei der Quelle handelt es sich beispielsweise um einen Gasflaschenbündel oder um einen Tank.

Alternativ oder ergänzend zu der im Behandlungsbecken 4 einmündenden Ansaugleitung 3 kann das zu behandelnde Fluid auch über eine Zuführleitung 13 beispielsweise aus einem Absetzbecken oder einer Abwasserzuleitung entnommen werden, was indes hier nicht weiter ausgeführt ist.

Die in Fig. 2 näher gezeigte Ausströmdüse 10 besteht im Wesentlichen aus drei Teilen: einem kreiszylindrischen Düsenkörper 14, einem Umlenkkegel 15 und einem Umlenkblech 16. Der Düsenkörper 14 ist auf einer oberen Stirnseite mit einem Prozessanschluss 17 zum vorzugsweise lösbaren Befestigen an der, in Fig. 2 nur gestrichelt angedeuteten, Zulaufleitung 8 ausgerüstet. Beim Prozessanschluss 17 handelt es sich beispielswiese um eine Flansch-, Gewinde- oder Schweißverbindung.

Auf der dem Prozessanschluss 17 gegenüberliegenden Stirnseite des Düsenkörpers 14 befindet sich ein Düsenausgang, welcher im hier gezeigten Ausführungsbeispiel aus vier radialen, in Umlaufrichtung in gleichen Winkelabständen angeordneten Austrittsöffnungen 18a, 18b, 18c, 18d in Gestalt halbkreisförmiger Bohrungen besteht. Anstelle der hier gezeigten vier Bohrungen können im Übrigen auch mehr oder weniger Austrittsöffnungen 18a, 18b, 18c, 18d zum Einsatz kommen, die auch nicht zwingend kreis- oder halbkreisförmigen Querschnitt aufweisen müssen.

Das Umlenkblech 16 ist eine zylindrische Scheibe, die senkrecht zur Achse 9 des Düsenkörpers 14 ausgerichtet ist und fest am Düsenkörper 14 montiert ist, beispielsweise durch Verschweißen an den zwischen den Austrittsöffnungen 18a, 18b, 18c, 18d vorstehenden Abschnitten 19 des Düsenkörpers 14. Das Umlenkblech 16 ist so ausgebildet, dass es in radialer Hinsicht allseitig über den Außenumfang des Düsenkörpers 14 hinausragt.

Der Umlenkkegel 15 ist auf der dem Düsenkörper 14 zugewandten Innenseite des Umlenkblechs 16 angeordnet und bevorzugt fest an diesem montiert oder einstückig mit diesem ausgeführt. Der Umlenkkegel 15 ist radialsymmetrisch zur Längsachse 20 des Düsenkörpers 14 angeordnet und weist bevorzugt eine konvex gekrümmte Mantellinie (Außenkontur) 21 auf, d.h. ausgehend von der Spitze 22 des Umlenkkegels 15 steigt der Kegelradius in Richtung der Grundfläche stärker als linear mit der Höhe des Kegels an. Beispielsweise beschreibt die Mantellinie 21 dabei eine Parabel.

Im Betrieb der Vorrichtung 1 wird ein zu behandelndes Fluid, im Ausführungsbeispiel Abwasser, über die Ansaugleitung 3 und/oder die Zuführleitung 13 von der Pumpe 5 angesaugt und durch die Rohrleitung 2 gefördert. In der Mischeinrichtung 7 wird das Fluid im einem Gas, im Ausführungsbeispiel Sauerstoff oder Druckluft, angereichert und über die Zulaufleitung 8 der Ausströmdüse 10 zugeführt.

Der mit gleichmäßig axialem Geschwindigkeitsprofil aus der Rohrleitung 2 in den Düsenkörper 14 der Ausströmdüse 10 eintretende angereicherte Fluidstrom wird vom Umlenkkegel 15 zu den Austrittsöffnungen 18a, 18b, 18c, 18d hin umgelenkt und tritt schließlich mit radialer Geschwindigkeit aus der Ausströmdüse 10 aus. Aufgrund der konkaven Zuformung der Mantellinie 21 des Umlenkkegels 15 erfolgt die Überführung der axialen Strömung in eine radiale Strömung sanft und ohne plötzliche Sprünge oder Querschnittsverengungen. Dies minimiert den Druckabfall über die Ausströmdüse 10 gegenüber beispielsweise einer Ausströmeinrichtung mit einfachen Blenden.

Die hier gezeigte drehsymmetrische Anordnung der radialen Bohrungen 18a, 18b, 18c, 18d ist insbesondere dann von Vorteil, wenn die Vorrichtung 1 - wie in Fig. 1 gezeigt - im Bereich der Mitte des Behandlungsbeckens 4 und nahe am Beckenboden 11 angeordnet wird. Bei einer derartigen zentralen Installation in der Mitte des Behandlungsbeckens 4 sorgt die Ausströmdüse 10 für eine gleichmäßige und flächendeckende Verteilung des Sauerstoffs in dem im Behandlungsbecken 4 anwesenden Fluid 12. Zu den Beckenrändern 23a, 23b hin bilden sich im Fluid 12 vertikale Strömungswalzen 24a, 24b aus, die eine homogene Durchmischung des Fluids 12 gewährleisten und den Belebtschlamm in einem schwebenden Zustand halten.

Bezugszeichenliste

| | |
|---|---|
| 1 | Vorrichtung |
| 2 | Rohrleitung |
| 3 | Ansaugleitung |
| 4 | Behandlungsbecken |
| 5 | Pumpe |
| 6 | Gaszufuhrleitung |
| 7 | Mischeinrichtung |
| 8 | Zulaufleitung |
| 9 | Auslauf |
| 10 | Ausströmdüse |
| 11 | Beckenboden |
| 12 | Fluid |
| 13 | Zuführleitung |
| 14 | Düsenkörper |
| 15 | Umlenkkegel |
| 16 | Umlenkblech |
| 17 | Prozessanschluss |
| 18a, 18b, 18c, 18d | Austrittsöffnung |
| 19 | Abschnitt |
| 20 | Längsachse |
| 21 | Mantellinie (Außenkontur) |
| 22 | Spitze des Umlenkkegels |
| 23a, 23b | Beckenrand |
| 24a, 24b | Strömungswalze |

**Patentansprüche**

1. Vorrichtung zum Eintragen eines Gases in ein Fluid, mit einer Rohrleitung (2), in der eine Fördereinrichtung (5) zum Ansaugen und Fördern eines zu behandelnden Fluids sowie eine mit einer Gaszuleitung (6) ausgerüstete Mischeinrichtung (7) zum Anreichern des Fluids mit einem Gas integriert sind und die an einer Ausströmdüse (10) zum Einleiten des mit dem Gas angereicherten Fluids in ein Behandlungsbecken (4) ausmündet,
**dadurch gekennzeichnet,**
**dass** die Ausströmdüse (10) einen rohrförmigen Düsenkörper (14) aufweist, der an seiner mündungsseitigen Stirnseite mit wenigstens einer radialen Austrittsöffnung (18a, 18b, 18c, 18d) sowie mit einem im Wesentlichen senkrecht zur Längsachse (20) des Düsenkörpers (14) angeordneten und sich radial über den Außenumfang des Düsenkörpers (2) erstreckendem Umlenkblech (16) ausgerüstet ist, das in Strömungsrichtung gesehen hinter der wenigstens einen Austrittsöffnung (18a, 18b, 18c, 18d) angeordnet ist und auf dem ein sich mit seiner Spitze (22) zentral in das Innere des Düsenkörpers (14) hinein erstreckender Umlenkkegel (15) angeordnet ist.

2. Vorrichtung nach Anspruch 1, **dadurch gekennzeichnet, dass** eine Mehrzahl an vorzugsweise gleichartigen, in vorzugsweise gleichen Winkelabständen angeordneten Austrittsöffnungen (18a, 18b, 18c, 18d) vorgesehen sind.

3. Vorrichtung nach Anspruch 1 oder 2, **dadurch gekennzeichnet, dass** der Umlenkkegel (15) eine gerade oder eine konvex, vorzugsweise quadratisch, gekrümmte Mantellinie (21) aufweist.

4. Vorrichtung nach einem der vorhergehenden Ansprüche, **dadurch gekennzeichnet, dass** die Ausströmdüse (10) mit einem Prozessanschluss (17) zum lösbaren Befestigen an der Rohrleitung (2) ausgerüstet ist.

5. Vorrichtung nach einem der vorhergehenden Ansprüche, **dadurch gekennzeichnet, dass** die Mischeinrichtung (7) eine Venturidüse umfasst.

6. Vorrichtung nach einem der vorhergehenden Ansprüche, **dadurch gekennzeichnet, dass** die Rohrleitung (2) mit einer Ansaugleitung (3) für das zu behandelnde Fluid ausgerüstet ist, die im Betrieb der Vorrichtung (1) in ein im Behandlungsbecken (4) befindliches Fluid eintaucht.

7. Vorrichtung nach einem der vorhergehenden Ansprüche, **dadurch gekennzeichnet, dass** als zu behandelndes Fluid in der Rohrleitung (2) ein wässeriges Fluid, wie Abwasser und/oder Belebtschlamm, und als Gas Sauerstoff oder Kohlendioxid zum Einsatz kommt.

8. Verwendung einer Vorrichtung nach einem der vorhergehenden Ansprüche zum Einleiten eines sauerstoffreichen Gases in ein Behandlungsbecken (4) (Belebungsbecken) einer biologischen Abwasserreinigungsstufe.

**Fig. 1**

**Fig. 2**

**Europäisches Patentamt**
**European Patent Office**
**Office européen des brevets**

# EUROPÄISCHER RECHERCHENBERICHT

**Nummer der Anmeldung**

EP 24 17 2070

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 4 564 480 A (KAMELMACHER EDUARD [GB]) 14. Januar 1986 (1986-01-14) | 1,3-8 | INV. B01F23/232 |
| A | * Spalte 1, Zeile 10 - Zeile 15 * <br> * Spalte 2, Zeile 27 - Spalte 3, Zeile 3 * <br> * Abbildungen * | 2 | B01F23/454 <br> B01F25/21 <br> B01F25/312 <br> B01F25/53 |
| | - - - - - | | |
| X | DE 19 40 458 A1 (MIEJSKIE PRZED WODOCIAGOW I KA) 14. Mai 1970 (1970-05-14) | 1,3-5,7,8 | |
| A | * Seite 1, Absatz 1 * <br> * Seite 5, Absatz 1 - Absatz 3 * <br> * Abbildungen * | 2,6 | |
| | - - - - - | | |
| X | US 4 044 079 A (TVEIT OYVIND) 23. August 1977 (1977-08-23) | 1-4,6,7 | |
| A | * Spalte 1, Zeile 4 - Zeile 8 * <br> * Spalte 1, Zeile 63 - Spalte 2, Zeile 28 * <br> * Spalte 2, Zeile 44 - Spalte 3, Zeile 7 * <br> * Spalte 3, Zeile 64 - Spalte 4, Zeile 19 * <br> * Abbildungen 1,4,5 * | 5,8 | |
| | - - - - - | | |

**RECHERCHIERTE SACHGEBIETE (IPC)**

B01F

Der vorliegende Recherchenbericht wurde für alle Patentansprüche erstellt

| Recherchenort | Abschlußdatum der Recherche | Prüfer |
|---|---|---|
| Den Haag | 22. Oktober 2024 | Real Cabrera, Rafael |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 24 17 2070

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

22-10-2024

| Im Recherchenbericht angeführtes Patentdokument | | Datum der Veröffentlichung | Mitglied(er) der Patentfamilie | | | Datum der Veröffentlichung |
|---|---|---|---|---|---|---|
| US 4564480 | A | 14-01-1986 | KEINE | | | |
| DE 1940458 | A1 | 14-05-1970 | DE | 1940458 | A1 | 14-05-1970 |
| | | | FR | 2016925 | A1 | 15-05-1970 |
| US 4044079 | A | 23-08-1977 | GB | 1495089 | A | 14-12-1977 |
| | | | NO | 136638 | B | 04-07-1977 |
| | | | US | 4044079 | A | 23-08-1977 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10058331 A1
- DE 4315733 A1
- WO 2023023890 A1
- DE 2649756 A1
- FR 2825996 A1